# EUROPEAN PATENT SPECIFICATION

(11) **EP 2 584 223 B1**
(45) Date of publication and mention of the grant of the patent: **25.03.2015**
(21) Application number: 12188683.2
(22) Date of filing: 16.10.2012
(51) Int. Cl.: F16H 25/24, F16C 29/02, F16C 29/12, B23Q 5/40

(54) **Drive screw system comprising slide bearing and slide bearing**
Gewindespindelantrieb mit Gleitführung und Gleitführung
Système de vis de guidage comprenant un palier à glissement et palier à glissement

(30) Priority: 17.10.2011 WO PCT/EP2011/068119
(43) Date of publication of application: 24.04.2013
(73) Proprietor: NTN-SNR Roulements, 74000 Annecy (FR)
(72) Inventor: Grote, Detlef, 33818 Leopoldshöhe (DE)
(74) Representative: Bugnion Genève

(56) References cited:
- DE-A1- 10 101 230
- US-A- 4 878 390
- US-A1- 2001 024 535
- US-A1- 2004 050 192
- US-B1- 6 301 983

## Description

### TECHNICAL FIELD OF THE INVENTION

The present invention relates to rotative drive screw systems for linearly positioning a cooperating member, e.g. a translation nut.

### BACKGROUND ART

Drive screw systems are typically used to position a cooperating member, which will generically be called drive nut in the present application, in response to rotation of the drive screw.

The linear speed of the drive nut parallel to the rotation axis of the drive screw is directly proportional to the rotation speed of the drive screw. Hence, it is desirable to rotate the drive screw as quickly as possible to achieve linear displacement as quickly as possible.

However, the variable rotation speed of a drive screw generates vibration in particular when the rotation frequency matches one of the natural frequencies of the drive screw system. Such vibration may be excessive with resultant noise, wear or damage to the system. The natural frequencies of the drive screw system vary in particular with the position of the nut, the diameter of the drive screw and its unsupported length. The smaller the diameter/length ratio, the lower the speed at which the drive screw can be permitted to rotate, if the drive screw is to be prevented from reaching the first natural frequency. Consequently, the rotational speed of longer drive screws must be kept low, and the speed at which the nut moves along the drive screw will therefore be correspondingly slow. Additionally, axial compression loads exerted on the drive screw system may cause buckling.

In order to increase the effective length and rotation speed of a drive screw as well as the axial compression load carrying capacity without buckling, it has been suggested in US 5,531,557 to provide a drive screw system with a plurality of bearing assemblies coaxially disposed relative to each other for supporting the drive screw; The bearing assemblies automatically move back and forth between the proximal and distal ends of the drive screw with the drive nut to automatically maintain a predetermined maximum unsupported length of the drive screw. Each bearing assembly comprises two bearing supports connected to one another at a fixed length.

Thanks to the additional bearing assemblies, the lowest natural frequency of the system is increased, which allows higher rotation speed. However, the additional bearing assemblies cause vibration and noise of their own, in particular when the drive screw changes direction. Moreover, as the bearing assemblies are free to move linearly along the drive screw, they may start to scrawl uncontrollably in one direction or another due the residual vibration of the drive screw.

In order to avoid such scrawling motion of the additional bearing assemblies, it has been proposed in US 5,720,202 to provide a system of ropes and pulleys to couple the additional bearing assemblies to the drive nut, such that the position of the bearings is always linked to that of the drive nut and the bearings move at half the speed of the drive nut. The system of ropes and pulleys, however, may prove unreliable over time. Moreover, they do not solve the problem of noise generated when the drive screw changes direction.

US2004050192 discloses the features of the preamble of claim 1 in a linear unit comprising a profiled rail along which a carriage is arranged for sliding motion backwards and forwards by means of a reversible screw, which actuates the carriage and on either side of the carriage passes through a bore in a screw support. A pull rod displaces the screw support backwards and forwards along the profiled rail between to end stop positions, and the screw support serves as a support bearing carrying the screw between bearings supporting the screw at its ends. s. The screw support is made from a light-weight material, preferably from extruded aluminium, plastics or the like, and as two deformable tabs, biased by two springs to abut and slide against corresponding mating surfaces of the profiled rail.

### SUMMARY OF THE INVENTION

The invention aims at increasing the reliability of a drive screw system. According to the invention, there is provided a drive screw system comprising
- a stationary track,
- a drive screw mounted for rotation relative to the stationary track about a screw axis,
- a nut threadingly engaging the drive screw for linear displacement parallel to the screw axis in response to rotation of the drive screw,
- at least one slide bearing for radially supporting and guiding the drive screw, the slide bearing being moveable on the stationary track parallel to the screw axis, wherein the slide bearing is provided with at least a first friction pad moveable relative to the slide bearing in at least a first direction transverse to the screw axis, and spring means biasing the friction pad in said first direction against the stationary track.

Backlash between the slide bearing and the track is compensated by the friction pad, which allows a smooth and safe running of the slide bearing on the track despite large tolerances of the track. The friction pad slides on the track. Thanks to the spring means, a controlled pressure is maintained between the friction pad and the track. This controlled pressure leads to a controlled friction between the friction pad and the track, which contributes to stabilising the position of the slide bearing along the screw axis.

The slide bearing is provided with a first guide wall perpendicular to the screw axis for guiding the first friction pad and for preventing movement of the first friction pad relative to the slide bearing parallel to the screw axis. The first friction pad slides on the first guide wall so as to move parallel to the first guide wall.

The slide bearing is provided with a second friction pad moveable relative to the slide bearing in a second direction opposed the to first direction, and the spring means bias the second friction pad in the second direction against the stationary track. Hence, the slide bearing is maintained without backlash in the first and second direction relative to the track.

The spring means includes a compression spring between the first and second friction pad for biasing the first and second friction pads in the first and second transverse directions, respectively. This provides a very simple structure and minimises the number of parts. The compression spring is charged between two parallel faces of the first and second friction pads oriented such as to bias the first and second friction pads against the first and second guide walls, respectively. In one embodiment, the two parallel faces of the first and second friction pads are perpendicular to a geometric plane including the screw axis and the first and second directions, and have an intersection with said geometric plane which is at an angle relative both to the first and second directions and to the screw axis.

According to a preferred embodiment, the stationary track includes a channel comprising two opposed lateral faces parallel to the screw axis, the slide bearing being received between said lateral faces, the friction pads resting against the lateral faces. Preferably, the friction pads slide against the lateral faces.

According to a further preferred embodiment, the first friction pad is moveable relative to the slide bearing in a first perpendicular direction perpendicular to the first direction and to the screw axis, and the spring means bias the first friction pad in the first perpendicular direction. The spring means may include a compression spring acting between the slide bearing and the first friction pad for biasing the first friction pad in the first perpendicular direction.

Similarly, the second friction pad can be moveable relative to the slide bearing in a second perpendicular direction perpendicular to the second direction and to the screw axis, and the spring means bias the second friction pad in the second perpendicular direction. The spring means may comprise a compression spring acting between the slide bearing and the second friction pad for biasing the second friction pad in the second perpendicular direction. The first and second perpendicular directions can be identical or opposed.

The channel may comprise a further face parallel to the screw axis and perpendicular to the two opposed lateral faces, the friction pads resting against the further face. More specifically, the opposed parallel faces and further face may form a U-shaped channel.

The drive screw system may further comprise a second slide bearing and a link for maintaining a constant distance between the first and second slide bearings. Preferably, the first and second slide bearings are identical.

### DESCRIPTION OF THE DRAWINGS

Other advantages and features of the invention will then become more clearly apparent from the following description of specific embodiments of the invention given as non-restrictive examples only and represented in the accompanying drawings in which:
- figure 1 is a diagrammatic illustration of a drive screw system according to an embodiment of the invention;

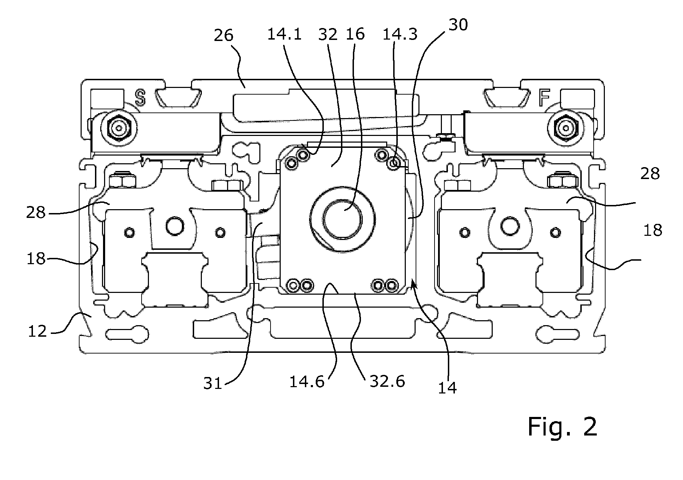

- figure 2 is a cross-section of the drive screw system of figure 1;
- figure 3 is an exploded view of a slide bearing of the drive screw system of figure 1;
- figure 4 is an exploded view of a slide bearing according to an alternative embodiment of the invention;
- figure 5 is a side view of the slide bearing of figure 4; and
- figure 6 is a cross-section of a drive screw system including the slide bearing of figure 4.

Throughout the description and drawings, identical reference numbers will be used to indicate identical or similar elements of the various embodiments.

### DETAILED DESCRIPTION OF A PREFERED EMBODIMENT

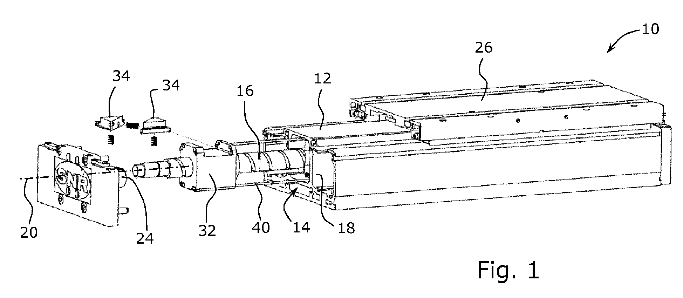

With reference to Figure 1, a drive screw system **10** comprises a frame **12** made of an extruded aluminium profile and provided with a central track **14** for receiving a drive screw **16** as well as two lateral tracks **18** on each side of the central track **14.** The drive screw **16** is mounted for rotation relative to the stationary frame **12** about a screw axis **20** parallel to the central and lateral tracks **14, 18.** One end of the drive screw **16** is powered by a motor (not shown), while the other end **22** is received in a stationary bearing **24.**

A carriage **26** is mounted on top of the frame **12** and supported on roller travellers **28** received in the lateral tracks **18** of the frame **12.** One of the roller travellers **28** is connected to a ball nut **30** via a side arm 32. The ball nut **30** is received in the central track **14** and threadingly engages the drive screw **16** so as to move in a fore and aft direction without rotation parallel to the screw axis in response to rotation of the drive screw **16.**

The drive screw system **10** further includes a pair of slide bearings **32,** each provided with a cylindrical through hole **33,** preferably lined with a bushing having the same diameter as the envelop of the drive screw, for receiving the drive screw **16** with sliding contact and for radially supporting the drive screw **16.**

Each slide bearing **32** is guided in the fore and aft direction in the central track **14.** In order to compensate for any backlash with the frame each slide bearing **32** is provided with two opposite friction pads **34** moveable relative to the slide bearing **32** in a cross direction towards an upper wall **14.1** of the central track **14** as well as towards an adjacent lateral wall **14.3** of the central track **14.** More specifically, each friction pad **34** has an overall triangular prismatic shape with an upper horizontal somewhat triangular base face **34.1** facing the upper wall **14.1** of the central track, a lower triangular base face **34.2** parallel to the upper base face **34.1** and facing a horizontal face **32.2** of the slide bearing **32,** a vertical lateral face **34.3** facing the adjacent lateral wall **14.3** of the central track, a vertical inner face **34.4** which is at an angle of between 30° and 60°, and preferably of 45° with the screw axis and a vertical guide face **34.5** perpendicular to the screw axis facing a guide wall **32.5** of the slide bearing **32.** The guide wall **32.5**, which is perpendicular to the screw axis **20,** may be provided with a transverse groove **32.51** and the guide face **34.5** may have a corresponding protruding strip **34.51,** which is loosely inserted in the groove **32.51** to both guide the friction pad **34** in the transverse direction and provide a limited freedom of movement in the "vertical" direction, i.e. the direction perpendicular to the transverse direction and to the screw axis **20.**

A compression spring **36** is loaded between the inner walls **34.4** of the two friction pads **34.** The spring **36** applies on each friction pad **34** a spring force in a direction substantially perpendicular to the inner wall **34.4.** Hence, the spring force has a component perpendicular to the to the guide wall **32.5** and a component parallel to the guide wall **32.5,** so that each friction pad **34** bears against the corresponding guide wall **32.5** and is resiliently biased laterally towards the adjacent lateral wall **14.3** of the central track.

A compression spring **38** is loaded between the lower base face **34.2** of each friction pad **34** and the "horizontal" face **32.2** of the slide bearing **32,** to resiliently bias the friction pad **34** towards the upper wall **14.1** of the central track 14.

The slide bearing **32** provided with the friction pads **34** and springs **36, 38** constitutes a subunit, which can be easily preassembled. In the operational position, when the slide bearing **32** is inserted in the central track **14,** the friction pads **34** bear against the corresponding lateral walls **14.3** and the upper wall **14.1** of the central track **14,** while a lower face **32.6** of the slide bearing **32** bears against a lower wall **14.6** of the track **14.**

The drive screw **16** is preferably provided with at least two such slide bearings **32,** which are linked to each other by a pair of rigid rods **40.**

To describe the operation of the drive screw system, we shall assume that the nut **30,** travellers **28** and carriage **26,** which form a subunit, are midway from the ends of the drive screw, and that the two slide bearings **32** are at equal distance from the nut **30,** each between the nut **30** and one of the two ends of the drive screw **16.** When the motor is powered, the drive screw **16** revolves about the screw axis **20** to move the nut **30,** travellers **28** and carriage **26** in one direction towards a first of the two ends of the drive screw **16.** At first, the two slide bearings **32** remain stationary and the drive screw **16** revolves with sliding contact in the through holes **33** of the slide bearings **32,** which provide a radial support for the drive screw **16.** When the nut moves towards said first end of the drive screw **16,** it will at some stage reach a first of the two slide bearings **32** and push the first slide bearing **32** along the drive screw **16** towards the first end of the drive screw **16.** The second slide bearing **32,** linked to the first slide bearing via the rods **40,** will be dragged along. When the revolving direction of the drive screw is reversed, the nut **30** moves in the other direction towards the second slide bearing **32** and the second end of the drive screw **30.** The two slide bearings **32** will remain stationary as long as the nut **30** has not reached the second slide bearing **32.** Once this position has been reached, the second slide bearing **34** will be pushed in front of the nut **30** towards the second end of the drive screw **30** and the first slide bearing **32** will be dragged along.

The linear movement of the slide bearings **34** ensures that the whole length of the drive screw **16** can be used.

The tension of the compression springs **36, 38** is chosen so that the slide bearings **32** do not move radially with respect to the track.

While the above example illustrates a preferred embodiment of the present invention it is noted that various other arrangements of drive screw system 10 may also be considered, which fall within the scope of the appended claims.

The terms "horizontal" and "vertical" direction have been used under the assumption that the fore and aft direction of the drive screw is horizontal. It is clear, however that the drive screw system can be oriented in any direction, e.g. with a vertical fore and aft direction.

Several pairs of slide bearings can be provided.

The springs **36, 38** can be of any type, e.g. flat springs. Two separate springs instead of one can be used to urge the two friction pads towards the two lateral walls of the track. Conversely, a single spring can be used for urging the backlash compression pads laterally and upwardly.

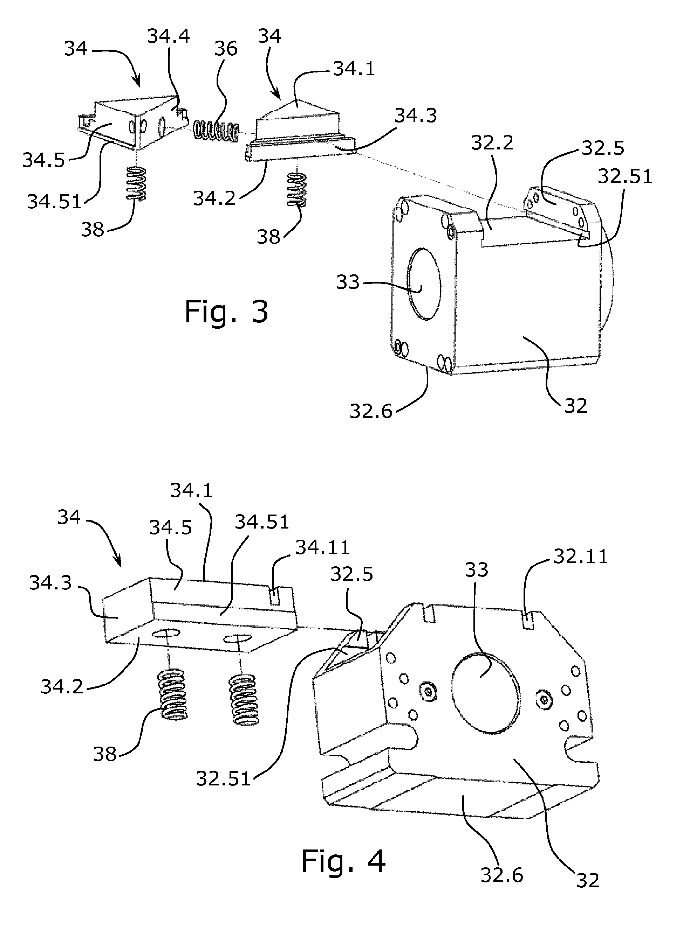

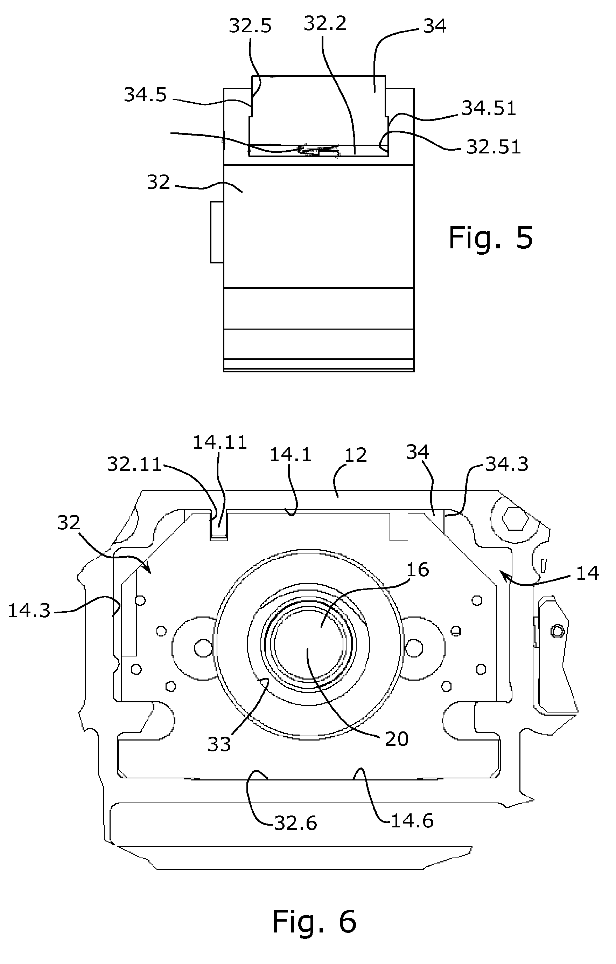

Referring now to figures 4 to 6, an alternative embodiment of a slide bearing for a drive screw assembly is illustrated. The slide bearing is provided with a cylindrical through hole for receiving and guiding a screw nut **16.** As illustrated in figure 6 the slide bearing is received in the central track **14** of the frame **12** of a drive screw system **10** similar to the drive screw system of figure 1.

The slide bearing **32** is further provided with a friction pad **34** moveable relative to the slide bearing **32** in a direction perpendicular to the direction of the through hole towards an upper wall **14.1** of the central track **14.** The friction pad **34** has an overall parallelepiped shape with an upper horizontal base face **34.1** facing the upper wall **14.1** of the central track, a lower base face **34.2** parallel to the upper base face **34.1** and facing a horizontal face **32.2** of the slide bearing **32,** two vertical lateral faces **34.3** facing the adjacent lateral walls **14.3** of the central track and two vertical guide faces **34.5** perpendicular to the screw axis and facing guide walls **32.5** of the friction pad **32.** The guide walls **32.5,** which are perpendicular to the screw axis **20,** may be provided with a transverse groove **32.51** and the guide face **34.5** may have a corresponding protruding strip **34.51,** which is loosely inserted in the groove **32.51** to both guide the friction pad **34** in the transverse direction and provide a limited freedom of movement in the "vertical" direction, i.e. the direction perpendicular to the transverse direction and to the screw axis **20.** The upper base face **34.1** is provided with a groove **34.11** aligned with similar grooves **32.11** provided on the slide bearing and parallel to the fore and aft direction of the screw nut. These grooves **34.11, 32.11** cooperate with a guide rib **14.11** protruding from the upper wall **14.1** of the central track **14** and extending in the fore and aft direction. Remarkably, a minimal play is kept between the sides of the guide rib **14.11** and the sides of the grooves **34.11** and a greater clearance is left between the leading edge of the guide rib **14.11** and the bottom of the grooves **32.11, 34.11.**

A pair of compression springs **38** are loaded between the lower base face **34.2** of each friction pad **34** and the "horizontal" face **32.1** of the slide bearing **32,** to resiliently bias the friction pad **34** towards the upper wall **14.1** of the central track **14.**

The slide bearing **32** provided with the friction pad **34** and springs **38** constitutes a subunit, which can be easily preassembled. In the operational position, when the slide bearing **32** is inserted in the central track **14,** the friction pad **34** bears against the upper wall **14.1** of the central track **14,** while a lower face **32.6** of the slide bearing **32** bears against a lower wall **14.6** of the track **14.** The lateral position of the slide bearing **32** and of the friction pad is defined by the guide rib **14.11** and grooves **32.11, 34.11.**

## Claims

1. A drive screw system (10) comprising
- a stationary track (14),
- a drive screw (16) mounted for rotation relative to the stationary track about a screw axis (20),
- a nut (30) threadingly engaging the drive screw (16) for linear displacement parallel to the screw axis in response to rotation of the drive screw, and
- at least a first slide bearing (32) for radially supporting and guiding the drive screw, the slide bearing being moveable on the stationary track parallel to the screw axis, wherein the first slide bearing (32) is provided with
- at least a first friction pad (34) moveable relative to the first slide bearing (32) in at least a first transverse direction transverse to the screw axis (20),
- a second friction pad (34) moveable relative to the first slide bearing (32) in a second transverse direction opposed to first transverse direction, and
- spring means (36, 38) biasing the first friction pad (34) in said first transverse direction against the stationary track (14), and biasing the second friction pad (34) in the second transverse direction against the stationary track (14);
**characterised in that**:
- the first slide bearing (32) is provided with a first guide wall (32.5) perpendicular to the screw axis (20) for guiding the first friction pad (34) and preventing movement of the first friction pad (34) relative to the first slide bearing (32) parallel to the screw axis (20);
- the first slide bearing (32) is provided with a second guide wall (32.5) parallel to the first guide wall (32.5) for guiding the second friction pad (34) and preventing movement of the second friction pad (34) relative to the first slide bearing (32) parallel to the screw axis (20);
- the spring means (36, 38) includes a compression spring between the first and second friction pads (34) for biasing the first and second friction pads (34) in the first and second transverse directions, respectively; and
- the compression spring is charged between two parallel faces of the first and second friction pads (34) oriented such as to bias the first and second friction pads (34) against the first and second guide walls (32.5), respectively.

2. The drive screw system (10) of claim 1, wherein the stationary track (14) includes a channel comprising two opposed lateral walls (14.3) parallel to the screw axis (20), the first slide bearing (32) being received between said lateral walls (14.3), the friction pads (34) resting against the lateral walls (14.3).

3. The drive screw system (10) of any one of the preceding claims, wherein the first friction pad (34) is moveable relative to the first slide bearing (32) in a first perpendicular direction perpendicular to the first transverse direction and to the screw axis (20), and the spring means (36, 38) bias the first friction pad (34) in the first perpendicular direction.

4. The drive screw system (10) of claim 3, wherein the spring means (36, 38) comprise a compression spring acting between the first slide bearing (32) and the first friction pad (34) for biasing the first friction pad (34) in the first perpendicular direction.

5. The drive screw system (10) of claim 3 or claim 4, wherein the second friction pad (34) is moveable relative to the first slide bearing (32) in a second perpendicular direction perpendicular to the second transverse direction and to the screw axis (20), and the spring means (36, 38) bias the second friction pad (34) in the second perpendicular direction.

6. The drive screw system (10) of claim 5, wherein the spring means (36, 38) comprise a compression spring acting between the first slide bearing (32) and the second friction pad (34) for biasing the second friction pad (34) in the second perpendicular direction.

7. The drive screw system (10) of claim 5 or claim 6, wherein the first and second perpendicular directions are identical.

8. The drive screw (16) of claim 2 and claim 7, wherein the channel comprises a further wall (14.1) parallel to the screw axis (20) and perpendicular to the two opposed lateral walls (14.3), the friction pads (34) resting against the further wall (14.1).

9. The drive screw system (10) of any one of the preceding claims, further comprising a second slide bearing (32) and a link (40) for maintaining a constant distance between the first and second slide bearings (32).

10. The drive screw system (10) of claim 9, wherein the first and second slide bearings (32) are identical.

## Patentansprüche

1. Antriebsspindelsystem (10), umfassend:
- eine ortsfeste Schiene (14),
- eine Antriebsspindel (16), die derart montiert ist, dass sie relativ zur Schiene um eine Spindelachse (20) rotiert,
- eine über ein Gewinde in die Antriebsspindel (16) eingreifende Mutter (30) zur linearen Verschiebung parallel zur Spindelachse als Reaktion auf eine Rotation der Antriebsspindel,
- mindestens ein erstes Gleitlager (32) zur radialen Abstützung und Führung der Antriebsspindel, wobei das Gleitlager auf der ortsfesten Schiene parallel zur Spindelachse beweglich ist, wobei das erste Gleitlager (32)
- mindestens ein erstes relativ zum ersten Gleitlager (32) in mindestens einer ersten quer zur Spindelachse (20) verlaufenden Querrichtung bewegliches Reibungskissen (34);
- ein zweites, relativ zum ersten Gleitlager (32) in einer zweiten, der ersten Querrichtung entgegengesetzten Querrichtung bewegliches Reibungskissen (34) und
- Federmittel (36, 38), die das erste Reibungskissen (34) in die erste Querrichtung gegen die ortsfeste Schiene (14) vorspannen und das zweite Reibungskissen (34) in die zweite Querrichtung gegen die ortsfeste Schiene (14) vorspannen, aufweist,
**dadurch gekennzeichnet, dass**
- das erste Gleitlager (32) mit einer ersten Leitwand (32.5) versehen ist, die senkrecht zur Spindelachse (20) verläuft, um das erste Reibungskissen (34) zu führen und Bewegungen des ersten Reibungskissens (34) relativ zum ersten Gleitlager (32) parallel zur Spindelachse (20) zu verhindern;
- das erste Gleitlager (32) mit einer zweiten Leitwand (32.5) versehen ist, die parallel zur ersten Leitwand (32.5) verläuft, um das zweite Reibungskissen (34) zu führen und Bewegungen des zweiten Reibungskissens (34) relativ zum ersten Gleitlager (32) parallel zur Spindelachse (20) zu verhindern;
- die Federmittel (36, 38) eine Druckfeder zwischen erstem und zweitem Reibungskissen (34) zur Vorspannung der ersten und zweiten Reibungskissen (34) jeweils in die erste und zweite Querrichtung aufweist; und
- die Druckfeder zwischen zwei parallelen Flächen der ersten und zweiten Reibungskissen (34) geladen ist, die derart orientiert sind, dass das erste und das zweite Reibungskissen (34) jeweils gegen die erste und zweite Leitwand (32.5) vorgespannt sind.

2. Antriebsspindelsystem (10) nach Anspruch 1, wobei die ortsfeste Schiene (14) einen Kanal aufweist, der zwei parallel zur Spindelachse (20) verlaufende entgegengesetzte Seitenwände (14.3) umfasst, wobei das erste Gleitlager (32) zwischen die Seitenwände (14.3) aufgenommen wird und die Reibungskissen (34) an den Seitenwänden (14.3) anliegen.

3. Antriebsspindelsystem (10) nach einem der vorstehenden Ansprüche, wobei das erste Reibungskissen (34) relativ zum ersten Gleitlager (32) in einer ersten senkrecht zur ersten Querrichtung und zur Spindelachse (20) verlaufenden senkrechten Richtung beweglich ist, und die Federmittel (36, 38) das erste Reibungskissen (34) in die erste senkrechte Richtung vorspannen.

4. Antriebsspindelsystem (10) nach Anspruch 3, wobei die Federmittel (36, 38) eine zwischen dem ersten Gleitlager (32) und dem ersten Reibungskissen (34) wirkende Druckfeder zur Vorspannung des ersten Reibungskissens (34) in die erste senkrechte Richtung umfassen.

5. Antriebsspindelsystem (10) nach Anspruch 3 oder 4, wobei das zweite Reibungskissen (34) relativ zum ersten Gleitlager (32) in einer zweiten senkrecht zur zweiten Querrichtung und zur Spindelachse (20) verlaufenden senkrechten Richtung beweglich ist, und die Federmittel (36, 38) das zweite Reibungskissen (34) in die zweite senkrechte Richtung vorspannen.

6. Antriebsspindelsystem (10) nach Anspruch 5, wobei die Federmittel (36, 38) eine zwischen dem ersten Gleitlager (32) und dem zweiten Reibungskissen (34) wirkende Druckfeder zur Vorspannung des zweiten Reibungskissens (34) in die zweite senkrechte Richtung umfassen.

7. Antriebsspindelsystem (10) nach Anspruch 5 oder 6, wobei die erste und zweite senkrechte Richtung identisch sind.

8. Antriebsspindel (16) nach Anspruch 2 und 7, wobei der Kanal eine weitere, parallel zur Spindelachse (20) und senkrecht zu den beiden entgegengesetzten Seitenwänden (14.3) verlaufende Wand (14.1) aufweist, wobei die Reibungskissen (34) an der weiteren Wand (14.1) anliegen.

9. Antriebsspindelsystem (10) nach einem der vorstehenden Ansprüche, ferner umfassend ein zweites Gleitlager (32) und ein Bindeglied (40) zur Aufrechterhaltung eines konstanten Abstandes zwischen erstem und zweitem Gleitlager (32).

10. Antriebsspindelsystem (10) nach Anspruch 9, wobei das erste und zweite Gleitlager (32) identisch sind.

## Revendications

1. Système de vis d'entraînement (10) comportant:
- une piste stationnaire (14),
- une vis d'entraînement (16) montée en rotation par rapport à la piste stationnaire autour d'un axe de vis (20),
- un écrou (30) en prise de filetage avec la vis d'entraînement (16) pour un déplacement linéaire parallèle à l'axe de vis en réponse à une rotation de la vis d'entraînement, et
- au moins un premier palier lisse pour supporter et guider radialement la vis d'entraînement, le palier lisse étant mobile sur la piste stationnaire parallèlement à l'axe de vis, le premier palier lisse (32) étant pourvu
- d'au moins un premier coussinet de friction (34) mobile par rapport au premier palier lisse (32) dans au moins une première direction transversale, transversale par rapport à l'axe de vis (20),
- d'un deuxième coussinet de friction (34) mobile par rapport au premier palier lisse (32) dans une deuxième direction transversale opposée à la première direction transversale, et
- de moyens de ressort (36, 38) rappelant le premier coussinet de friction (34) dans ladite première direction transversale contre la piste stationnaire (14), et rappelant le deuxième coussinet de friction (34) dans la deuxième direction transversale contre la piste stationnaire (14);
**caractérisé en ce que**:
- le premier palier lisse (32) est pourvu d'une première paroi de guidage (32.5) perpendiculaire à l'axe de vis (20) pour guider le premier coussinet de friction (34) et empêcher un mouvement du premier coussinet de friction (34) par rapport au premier palier lisse (32) parallèlement à l'axe de vis (20);
- le premier palier lisse (32) est pourvu d'une deuxième paroi de guidage (32.5) parallèle à la première paroi de guidage (32.5) pour guider le deuxième coussinet de friction (34) et empêcher un mouvement du deuxième coussinet de friction (34) par rapport au premier palier lisse (32) parallèlement à l'axe de vis (20);
- les moyens de ressort (36, 38) incluent un ressort de compression entre le premier et le deuxième coussinets de friction (34) pour rappeler le premier et le deuxième coussinets de friction (34) dans la première et la deuxième directions transversales, respectivement; et
- le ressort de compression est chargé entre deux faces parallèles du premier et du deuxième coussinets de friction (34), orientées de manière à rappeler le premier et le deuxième coussinets de friction (34) contre la première et la deuxième parois de guidage, respectivement.

2. Système de vis d'entraînement (10) selon la revendication 1, dans lequel la piste stationnaire (14) inclut un canal comprenant deux parois latérales opposées (14.3) parallèles à l'axe de vis (20), le premier palier lisse (32) étant logé entre lesdites parois latérales (14.3), les coussinets de friction (34) étant en appui contre les parois latérales (14.3).

3. Système de vis d'entraînement (10) selon l'une quelconque des revendications précédentes, dans lequel le premier coussinet de friction (34) est mobile par rapport au premier palier lisse (32) dans une première direction perpendiculaire, perpendiculaire à la première direction transversale et à l'axe de vis (20), et les moyens de ressort (36, 38) rappellent le premier coussinet de friction (34) dans la première direction perpendiculaire.

4. Système de vis d'entraînement (10) selon la revendication 3, dans lequel les moyens de ressort (36, 38) comprennent un ressort de compression actif entre le premier palier lisse (32) et le premier coussinet de friction (34) pour rappeler le premier coussinet de friction (34) dans la première direction perpendiculaire.

5. Système de vis d'entraînement (10) selon la revendication 3 ou la revendication 4, dans lequel le deuxième coussinet de friction est mobile par rapport au premier palier lisse (32) dans une deuxième direction perpendiculaire, perpendiculaire à la deuxième direction transversale et à l'axe de vis (20) et les moyens de ressort (36, 38) rappellent le deuxième coussinet de friction (34) dans la deuxième direction perpendiculaire.

6. Système de vis d'entraînement (10) selon la revendication 5, dans lequel les moyens de ressort (36, 38) comprennent un ressort de compression actif entre le premier palier lisse (32) et le deuxième coussinet de friction (34) pour rappeler le deuxième coussinet de friction (34) dans la deuxième direction perpendiculaire.

7. Système de vis d'entraînement (10) selon la revendication 5 ou la revendication 6, dans lequel la première et la deuxième directions perpendiculaires sont identiques.

8. Système de vis d'entraînement (10) selon la revendication 2 et la revendication 7, dans lequel le canal comprend une autre paroi (14.1) parallèle à l'axe de vis (20) et perpendiculaire aux deux parois latérales opposées (14.3), les coussinets de friction (34) étant en appui contre l'autre paroi (14.3).

9. Système de vis d'entraînement (10) selon l'une quelconque des revendications précédentes, comprenant en outre un deuxième palier lisse (32) et une liaison (40) pour maintenir une distance constante entre le premier et le deuxième paliers lisses (32).

10. Système de vis d'entraînement (10) selon la revendication 9, dans lequel le premier et le deuxième paliers lisses (32) sont identiques.
